# EUROPEAN PATENT SPECIFICATION

(11) **EP 0 434 322 B1**
(45) Date of publication and mention of the grant of the patent: **12.02.1997**
(21) Application number: 90313729.7
(22) Date of filing: 17.12.1990
(51) Int. Cl.: C08L 23/04, C08J 5/18, B29C 49/08

(54) **Improved heat shrinkable polyolefin film**
Verbesserter heissschrumpfbarer Polyolefin-Film
Film thermo-rétractable amélioré à base de polyoléfine

(30) Priority: 18.12.1989 US 451977; 10.10.1990 US 592707
(43) Date of publication of application: 26.06.1991
(73) Proprietor: E.I. DU PONT DE NEMOURS AND COMPANY, Wilmington Delaware 19898 (US)
(72) Inventor: Snyder, John Douglas, South Clinton, Iowa 52732 (US)
(74) Representative: Jones, Alan John

(56) References cited:
- EP-A- 0 227 481
- EP-A- 0 240 705
- FR-A- 2 528 054
- US-A- 3 141 912
- US-A- 4 597 920

## Description

### Background of the Invention

### Field of the Invention

This invention relates to an improvement in the process of making heat shrinkable film and to the resultant film of certain LLDPE polymers.

### Description of Related Art

Heat shrinkable polymer film is typically made by extruding polymer from a melt into a film, followed by orienting the film by stretching it under temperature conditions where molecular orientation of the film occurs and the film does not tear. The film is then cooled in the stretched state, and upon subsequent heating, the film shrinks in seeking to cover its original dimensional state.

Irradiation of the film has been used prior to stretching to crosslink the film (polymer), thereby increasing resistance to tearing during stretching, but this has the twofold disadvantage of the increased cost of radiation and the inability to recycle through melt processing of any scrap generated in the heat shrinkable film manufacture.

The process described in U.S. Pat. 3,141,912 for making heat shrinkable film has achieved commercial utility for certain polymers without the need for irradiation of the film prior to stretching. In the continuous process of this patent, the polymer is extruded as a film in tubular form, the tube is quenched to a temperature below the orientation temperature range and is reheated to the orientation temperature range, followed by biaxially stretching of the film of the tube while within this temperature range. The biaxial stretch is done by (a) using internal gas pressure to expand the diameter of the tube to form a large "bubble" and (b) advancing the expanded tube at a faster rate than the extrusion rate, so as to obtain transverse and machine directions of orientation, respectively. Usually, the stretch is at least 3X in each direction. The film is then cooled and rolled up in the cooled state so as to retain the property of heat shrinkability.

U.S. Pat. 4,820,557 discloses the manufacture of multilayer heat shrinkable film in which one of the layers is a linear copolymer of ethylene with either 1-octene or 1-hexene, the linear copolymer having specified melt flow ratios which indicate a narrow molecular weight distribution and a density of 0.935 g/cc or less. The layer is also disclosed as being a blend of this copolymer with a large number of other polymers, including LDPE. The manufacture of the heat shrinkable film in this patent, however, is disclosed to involve radiation of the film prior to stretching.

FR-A-2 528 054 discloses a composition of 2 to 25 weight % of a free radical ethylene polymer of specific gravity between 0.91 and 0.94 and 75 to 98 weight % of a copolymer of ethylene and a C₄ + α-olefin with a specific gravity of between 0.905 and 0.940 and a melt index of 0.4 to 3 dg/minute.

Japanese Pat. Publication 60-257,232 (1985) discloses the compounding of LDPE and LLDPE together with a free-radical generator to cause the polymers to crosslink in the film extruder. The film is produced on a conventional blown film process in which the bubble is blown at or near the polymer's melting point. The film has little to no orientation and is not heat shrinkable. Bags of the resultant film are disclosed to have good heat seal strength.

U.S. Pat. 4,597,920 discloses the manufacture of heat shrinkable film by the process of U.S.Pat. 3,141,912 wherein the linear copolymer is of ethylene with at least one C₈-C₁₈ alpha-olefin, the copolymer having a melt index of 0.1 to 4.0 g/10 min,

density of 0.900 to 0.940 g/cc, a broad molecular weight distribution as indicated by the stress exponent being above 1.3, and having two distinct crystallite melting regions (melting points) at least 10°C apart. The patent also discloses that irradiation of extruded film prior to stretching is optional. In fact, the presence of the two distinct melting regions in the copolymer has enabled the heat shrinkable film of ethylene/1-octene copolymer to be made on a commercial basis without crosslinking prior to stretching. This commercial film is called Clysar® LLP shrink film.

Included in this patent is the disclosure in Table IV of blending increasing amounts of low density branched polyethylene with ethylene/1-octene copolymer; a decrease in film shrink force is the reported result. This aspect of the disclosure did not progress beyond the laboratory work reported wherein the stretching of film of the blends was done on a laboratory stretcher in an operation which was discontinuous from the film formation by melt pressing.

Despite the commercial success of the heat shrinkable film of ethylene/1-octene copolymer of U.S. Pat. 4,597,920, it has been desired to increase the economy of manufacture of this film without undertaking the expense of irradiation of the film prior to stretching and without being subject to the penalty of having non-melt processible scrap from the film manufacture. One way of economizing would be to increase the rate of production of the film on the same manufacturing equipment. The rate of production of this heat shrinkable film has been limited due to the difficulty of achieving the temperature control required for orienting the film within the stretching zone of the manufacturing machine. The film extrusion rate has to be adjusted so that the machine direction stretch desired can be obtained with the "bubble" being stably positioned in the stretching zone of the manufacturing equipment, including the shape of the bubble being symmetrical, indicating that uniform stretching of the film is present. This condition of bubble stability provides the condition for biaxial orientation without causing tearing of the film during stretching. If the extrusion rate could be increased without causing tearing and without reducing the machine direction stretch, then a greater amount of heat shrinkable film would be obtained from the same manufacturing equipment.

In the case of LLDPE wherein the copolymer is ethylene/1-hexene, the problem of producing heat shrinkable film without crosslinking prior to stretching is different. Such production is hardly possible at all. Thus, the production of heat shrinkable film from this copolymer without crosslinking prior to stretching does not appear to be reported in the prior art. The temperature required for orientation is so close to the melting point of the copolymer that film tearing occurs at even low extrusion rates. Because of this close proximity between orientation temperature and melting point, the strength of the copolymer is very low, which is responsible for the propensity of the film to orient non-uniformly and tear. It was for this reason that U.S. Pat. 4,597,920 required the alpha-olefin comonomer with ethylene to contain at least 8 carbon atoms, thereby excluding the disclosure of 1-hexene.

### Summary of the Invention

The present invention solves several problems described hereinbefore; namely, it enables LLDPE wherein the alpha-monoolefin comonomer is 1-hexene to be used to be made into heat shrinkable film without tearing. This improvement is obtained without crosslinking the LLDPE prior to stretching.

More specifically, the present invention can be described as an improvement in the continuous process for making heat shrinkable film from a linear copolymer of ethylene with at least 5% but less than 20% by weight based on the weight of the copolymer of 1-hexene said copolymer having a density of 0.900 to 0.935 g/cc, by extruding the copolymer into a film, and after heating the film to its orientation temperature, stretching said film biaxially by a factor of at least 3X in each direction without prior crosslinking, the improvement comprising blending with said copolymer prior to extrusion from 5 to 40% by weight based on the weight of the resultant blend of low density branched polyethylene (LDPE) having a density of 0.923 to 0.925.

The addition of the LDPE to the LLDPE, makes the resultant blend usable to make high quality heat shrinkable film, uniformly stretched and without tearing, at reasonable rates, whereas neither this particular LLDPE nor the LDPE by itself has this capability in the aforesaid process. Another embodiment of this invention resides in the resultant heat shrinkable film free of crosslinking and capable of shrinking upon application of heat at least 10% in each direction opposite from the directions of biaxial orientation, and being of a blend of 60 to 95% by weight of a linear copolymer of ethylene with at least 5% but less than 20% of 1-hexene based on the weight of the copolymer, said copolymer having a density of 0.900 to 0.935 g/cc, with 5 to 40% by weight of low density branched polyethylene based on the weight of the blend.

### Description of the Preferred Embodiments

The process for making the heat shrinkable films in accordance with the process of the present invention is conventional except for the addition of LDPE to the LLDPE polymers described and the results achieved as described above. Further description of the process is provided by U.S. Pat. 4,597,920 and the U.S. Pat. 3,141,912 and in the description of the latter patent hereinbefore as well as at col. 4, lines 1 to 22 of U.S. Pat. 4,760,116.

Preferably, the extrusion of the film in the process used in the present invention is in tubular form and the stretching of the film is at least 3X in biaxial directions and more preferably at least 3.5X in the machine direction and at least 4X in the transverse direction.

Preferably the orientation temperature (temperature of stretching) is at least 10°C below the melting point of the film.

The extrusion temperature will generally be in the range of 215 to 235°C, and the melting point of the polymer blend will generally be in the range of 115-130°C. The quenching of the extruded film will generally involve cooling the film to ambient temperatures. The film is then reheated to the orientation temperature for stretching. The orientation temperature is in fact a temperature range, believed to be at least 5°C, so that the film has some latitude to be stretchable without tearing. The quench/reheat method provides a controlled approach for achieving the orientation temperature desired for high production rates. The blend is not crosslinked prior to stretching, i.e., it is neither irradiated after extrusion but prior to stretching nor is a radical generator added to the blend prior to extrusion to cause crosslinking to be present in the film extrudate.

The LLDPE used in the present invention is a linear copolymer of ethylene with 1-hexene as described above. These copolymers are prepared by conventional low pressure polymerization methods using a transition metal catalyst such as described in U.S. Pat. 4,597,920. This LLDPE has mainly short chain branches of the pendant group of the 1-hexene comonomer and has little to no long chain branches from the main polymer chain. Typically, the copolymer will have a melt index of 0.1 to 4.0 g/10 min, preferably of 0.5 to 2.0 g/10 min and density of 0.900 to 0.935 g/cm³, preferably of 0.910 to 0.930 g/cm³.

With 1-hexene as a comonomer the LLDPE has only one melting point.

The preferred proportion of 1-hexene in the LLDPE is from 6 to 15 % by weight based on the weight of the copolymer. The ethylene content will be complemental to the proportion of comonomer, to total 100% of the weight of the copolymer.

The LLDPE may contain slip and anti-blocking agents such as 1500 to 3000 ppm of erucamide and 1000 to 2000 ppm of powdered silica, and other conventional additives for the polymer. These small amounts of additive are included in the weight proportions of LLDPE in the blends with LDPE described herein.

The expression low density branched polyethylene, used in the present invention, sometimes abbreviated as LDPE herein, means that the polymer, whether homopolymer of ethylene or copolymer of ethylene with a small amount of other ethylenically unsaturated comonomer, is made by the conventional process of high pressure polymerization involving a free radical catalyst. The resultant polymer is highly branched, i.e. it has many long chain branches generated by the free radical catalyst. The LDPE as ethylene homopolymer will typically have a density of 0.910 to 0.930 g/cm³ and preferably of 0.915 to 0.925 g/cm³ and melt index of 1.0 to 10 g/10 min, more preferably from 1.5 to 4.5 g/10 min. When the LDPE is a copolymer, the comonomer will generally not exceed 12% by weight based on the weight of the copolymer. The preferred comonomer is vinyl acetate for reasons of economy of the copolymer, but many other small amounts of comonomer can be used as will be recognized by one skilled in the art and still obtain the improvements described herein. The LDPE as homopolymer or copolymer preferably has a melting point of at least 10°C less than the melting point of the LLDPE used in the present invention. The LDPE may also contain small amounts of additives, such as those commonly formed in LDPE, namely slip and anti-block additives, which do not interfere with the effect of the LDPE in the blend.

The proportion of LDPE in the blends with the LLDPE used in the present invention will be selected as an effective amount to provide the improved results hereinbefore noted, depending on the particular LLDPE used. While this improvement can be realized within the 5 to 30 or 40% by weight range, the preferred amounts of LDPE in the blend will be from 10 to 35% by weight, and within this range either 20 to 35% or 15 to either 25 or 30% by weight of the blend, these weight percents being based on the total weight of the blend.

The LDPE and LLDPE components of the blend used in the present invention can be dry blended in the desired ratio by conventional mixing means, with the components generally being in the form of molding granules. The resultant dry blend can then be fed to the extruder which forms the film. Homogeneity of the blend may be improved by melt blending the components and additives together and feeding molding granules of the resultant melt blend to the extruder which forms the film. The heat shrinkable films made according to the present invention are characterized by uniform shrinkability in biaxial directions arising from the uniform orientation achieved in the stretching operation These films are useful for packaging and wrapping of articles in the same way as heat shrinkable films have been used heretofore. Typically, the heat shrinkable films made according to the present invention will be used as monolayer films having uniform thickness of 0.013 (0.5 mil) to 0.051 (2.0 mils) mm. These heat shrinkable films may be irradiated if desired and/or combined with other materials as a layer in a multilayer structure for achievement of specific properties, e.g., barrier properties not exhibited by the monolayer itself.

Examples of the present invention are as follows (parts and percents are by weight unless otherwise indicated):

### Example 1 (Comparative)

A blend of 20% by weight of LDPE with 80% by weight of LLDPE was prepared by melt blending. The LLDPE was a linear copolymer of ethylene with about 11% by weight based on the weight of the copolymer of 1-octene. The copolymer had major and minor melting points of 122 and 109°C, respectively, a melt index of 1.1 g/10 min., and density of 0.921 g/cc and contained 2000 ppm erucamide and 1300 ppm of powdered silica. The LDPE is highly branched ethylene homopolymer having a melting point of 109°C, a melt index of 1.9 g/10 min., and density of 0.923 g/cc. Granules of the blend were fed to an extruder. The blend was extruded into a tubular film, quenched, reheated to the stretching temperature range, stretched biaxially and cooled in the stretched state so as to form heat shrinkable film 0.75 mil (0.02 mm) thick by the conventional continuous process of U.S. Pat. 3,141,912. Details of the process were as follows: extrusion temperature 230°C, quench temperature 25°C, temperature range of reheat (orientation temperature of the film) about 105 to 110°C, degree of stretch obtained by blowing the reheated tubular form of the film into a bubble and using take-up rolls operating at a surface speed greater than the extrusion rate was 4X in the machine direction and 5X in the transverse direction. The hoop stress on the film in the bubble caused by the introduction of air under pressure within the extruded tube was 16,548 kpa (2,400 psi). For comparison purposes, the same LLDPE but by itself was subjected to the same process. The results of these runs are shown in the following Table.

**TABLE I**

| | LLDPE | 80:20 blend of LLDPE with LDPE | |
|---|---|---|---|
| Extrusion Rate | 16.5 m/min | 17.5 m/min | 18.5 m/min |
| High shrinkable film properties | | | |
| Haze, % | 2.1 | 2.0 | 1.9 |

| Gloss | | | |
|---|---|---|---|
| Bis | 131 | 136 | 144 |
| Bos | 136 | 138 | 135 |
| Transparency, % | 70 | 77 | 76 |

| Shrinkage,% (102°C) | | | |
|---|---|---|---|
| MD | 23 | 23 | 24 |
| TD | 30 | 33 | 34 |

| Modulus, mPa | | | |
|---|---|---|---|
| MD | 283 | 276 | 276 |
| TD | 283 | 283 | 276 |

| Tensile Str., mPa | | | |
|---|---|---|---|
| MD | 76 | 83 | 69 |
| TD | 90 | 83 | 90 |

| Elongation, % | | | |
|---|---|---|---|
| MD | 167 | 133 | 151 |
| TD | 152 | 127 | 127 |

| Coef. of Friction | | | |
|---|---|---|---|
| Bis | 0.12 | 0.10 | 0.09 |
| Bos | 0.11 | 0.09 | 0.11 |

| Elmendorf, Tear, g | | | |
|---|---|---|---|
| MD | 42 | 50 | 52 |
| TD | 43 | 41 | 46 |

The extrusion rate of 16.5 m/min for the film of the LLDPE by itself was the maximum that the film bubble could tolerate without becoming unstable. Table I shows that the extrusion rate can be increased by as much as 12% for the film of the LLDPE/LDPE blend without any significant sacrifice in film properties, including without any decrease in machine direction stretch. Of course the film take up roll speed was increased to maintain the same degree of machine direction stretch as the extrusion rate was increased. At the higher rate of production of heat shrinkable film, the manufacturing process using the film blend in accordance with the present invention appeared to operate as smoothly, i.e., without machine downtime caused by film tearing, as the process using the LLDPE by itself operating at the lower (but maximum for it) extrusion rate.

Heat shrinkable film made by the process of the present invention can be irradiated for the purpose of increasing burn-through resistance when heat is applied to cause the film to shrink wrap an article enclosed within it. Such heat may overheat portions of the film which are not in contact with the article at the time of heating and this overheating can cause the film to melt and form a hole in the shrink wrap, this hole being referred to as "burn-through". This irradiation can be carried out in an operation separate from the manufacture of the heat shrinkable film, permitting all scrap to be recovered from the film manufacture such as by trimming the film edges prior to irradiation, so that the scrap is recyclable via melt processing.

Heat shrinkable film made solely of the LLDPE used in this Example exhibits burn-through at about 360°F (182°C). When subjected to irradiation of 2 megarads, the burn-through temperature of the film increased to 395°F (202°C). Heat shrinkable film of the blend used in this Example exhibited a burn-through temperature of 390°F (199°C) when subjected to the same irradiation and burn-through test, whereby heat shrinkable film made by the process of the present invention when irradiated provides comparable improvement in burn-through resistance.

### Example 2

Attempts were made to form heat shrinkable film by the continuous process of U.S. Pat. 3,141,912 using a linear copolymer of ethylene with about 9% by weight of 1-hexene, the copolymer having a single melting point of 122°C, a density of 0.918 g/cc and melt index of 1.0 g/10 min on a different production line than used in Example 1. Various extrusion temperatures, reheating temperatures, and biaxial stretching amounts were tried, but it was not possible to produce a stable bubble. Typically, the film would not orient uniformly as indicated by thick and thin sections appearing in the bubble. Dry blending of 20% by weight of the LDPE used in Example 1 with the ethylene/1-hexene copolymer, followed by extrusion in accordance with the continuous process of U.S. Pat. 3,141,912, resulted in easy formation of a stable bubble and uniform heat shrinkable film. The process conditions used for successful operation were as follows: extrusion temperature was 225-230°C, extrusion rate was 2 m/min., orientation temperature of the film was 105 to 110°C., and hoop stress on the film in the bubble was 11,721 kpa (1,700 psi). The LLDPE copolymer of Example 1 was run under the same conditions so that the resultant heat shrinkable film properties could be compared, as shown in Table II.

**TABLE II**

| | Ethylene/1-octene copolymer of Example 1 | Ethylene/1-hexene copolymer Blended with LDPE (80:20) |
|---|---|---|
| Film gauge | 0.032 mm (1.2 mil) | 0.029 mm (1.1 mil) |
| Haze, % | 1.2 | 1.5 |
| Gloss | 158 | 154 |
| Transparency | 82 | 73 |

| Shrinkage, % (102°C) | | |
|---|---|---|
| MD | 20 | 19 |
| TD | 27 | 30 |

The properties of the film made from the blend compare favorably with the properties of the film made from the ethylene/1-octene copolymer by itself. The extrusion rate used was believed to be much less than the maximum extrusion rate possible for the film made from the blend.

Similar results to Examples 1 and 2 can be obtained with lesser and greater amounts of LDPE blended with the LLDPE copolymers described herein. The relatively high level of LDPE used in the Examples also provides economy to the resultant film in that LDPE is less expensive than the LLDPE copolymer.

As many widely different embodiments of this invention may be made without departing from the spirit and scope thereof, it is to be understood that this invention is not limited to the specific embodiments thereof except as defined in the appended Claims.

## Claims (Claims for the following Contracting State(s): AT, BE, CH, DE, DK, FR, GB, GR, IT, LI, LU, NL, SE)

1. A heat shrinkable film comprising 60-95 weight % of a linear ethylene copolymer of ethylene and 1-hexene having a density of 0.900 to 0.935 g/cc ("LLDPE") wherein at least 5% but less than 20% by weight of the LLDPE copolymer is derived from 1-hexene, and 5-40 weight % of a branched low density polyethylene ("LDPE") having a density of 0.923 to 0.925.

2. A film according to claim 1 wherein the 1-hexene content in the LLDPE is 6 to 15% by weight.

3. A film according to either of claims 1 and 2 wherein the final film composition is oriented at least 3X in both the machine direction and traverse direction.

4. A film according to any one of the preceding claims wherein the melting point of the LDPE is at least 10°C below the melting point of the LLDPE.

5. A film according to any one of the preceding claims further defined as a monolayer film.

## Claims (Claims for the following Contracting State(s): ES)

1. A process for making a heat shrinkable film comprising extruding a blend of 60-95 weight % of a linear ethylene copolymer of ethylene and 1-hexene having a density of 0.900 to 0.935 g/cc ("LLDPE") wherein at least 5% but less than 20% by weight of the LLDPE copolymer is derived from 1-hexene, and 5-40 weight % of a branched low density polyethylene ("LDPE") having a density of 0.923 to 0.925 and orienting the film at least 3X in both the machine and transverse directions.

2. A process according to claim 1 wherein the 1-hexene content in the LLDPE is 6 to 15% by weight.

3. A process according to either of claims 1 and 2 wherein the melting point of the LDPE is at least 10°C below the melting point of the LLDPE.

## Patentansprüche (Patentansprüche für folgende(n) Vertragsstaat(en): AT, BE, CH, DE, DK, FR, GB, GR, IT, LI, LU, NL, SE)

1. Wärmeschrumpfbare Folie, umfassend 60 bis 95 Gew.-% eines linearen Ethylencopolymeren aus Ethylen und 1-Hexen, das eine Dichte von 0,900 bis 0,935 g/cc ("LLDPE") aufweist, wobei sich wenigstens 5 %, jedoch weniger als 20 Gew.-% des LLDPE-Copolymeren von 1-Hexen und 5 bis 40 Gew.-% eines verzweigten Polyethylens mit niedriger Dichte ("LDPE"), das eine Dichte von 0,923 bis 0,925 besitzt, ableiten.

2. Folie nach Anspruch 1, bei der der 1-Hexengehalt in dem LLDPE 6 bis 15 Gew.-% beträgt.

3. Folie nach einem der Ansprüche 1 und 2, bei der die endgültige Folienzusammensetzung wenigstens um 3X sowohl in Maschinen- als auch in Querrichtung orientiert ist.

4. Folie nach einem der vorhergehenden Ansprüche, bei der Schmelzpunkt des LDPE wenigstens 10 °C unterhalb des Schmelzpunktes des LLDPE liegt.

5. Fo.ie nach einem der vorhergehenden Ansprüche, die zusätzlich als Einzelschichtfolie definiert ist.

## Patentansprüche (Patentansprüche für folgende(n) Vertragsstaat(en): ES)

1. Verfahren zur Herstellung einer wärmeschrumpfbaren Folie, umfassend die Extrusion einer Mischung aus 60 bis 95 Gew.-% eines linearen Ethylencopolymeren aus Ethylen und 1-Hexen, das eine Dichte von 0,900 bis 0,935 g/cc ("LLDPE") aufweist, wobei sich wenigstens 5 %, jedoch weniger als 20 Gew.-% des LLDPE-Copolymeren von 1-Hexen, und 5 bis 40 Gew.-% eines verzweigten Polyethylens mit niedriger Dichte ("LDPE"), das eine Dichte von 0,923 bis 0,925 besitzt, ableiten, und die Orientierung der Folie um wenigstens 3X sowohl in Maschinen- als auch in Querrichtung.

2. Verfahren nach Anspruch 1, bei dem der 1-Hexengehalt in dem LLDPE 6 bis 15 Gew.-% beträgt.

3. Verfahren nach einem der Ansprüche 1 und 2, bei dem der Schmelzpunkt des LDPE wenigstens 10°C unterhalb des Schmelzpunktes des LLDPE liegt.

## Revendications (Revendications pour l'(les) Etat(s) contractant(s) suivant(s): AT, BE, CH, DE, DK, FR, GB, GR, IT, LI, LU, NL, SE)

1. Film thermorétractable comprenant 60 à 95 % en poids d'un copolymère d'éthylène linéaire d'éthylène et de 1-hexène, ayant une masse volumique de 0,9 à 0,935 g/cm³ ("LLDPE"), dans lequel au moins 5 % mais moins de 20 % en poids du copolymère LLDPE sont obtenus à partir de 1-hexène, et 5 à 40 % en poids d'un polyéthylène ramifié basse densité ("LDPE") ayant une densité de 0,923 à 0,925.

2. Film selon la revendication 1, dans lequel la teneur en 1-hexène du LLDPE est de 6 à 15 % en poids.

3. Film selon les revendications 1 et 2, dans lequel la composition finale du film est orientée au moins 3X tant dans la direction machine que dans la direction transversale.

4. Film selon l'une quelconque des revendications précédentes, dans lequel le point de fusion du LDPE est au moins 10°C en dessous du point de fusion du LLDPE.

5. Film selon l'une quelconque des revendications précédentes, défini en outre en tant que film monocouche.

## Revendications (Revendications pour l'(les) Etat(s) contractant(s) suivant(s): ES)

1. Un procédé de fabrication d'un film thermorétractable comprenant l'extrusion d'un mélange de 60 à 95 % en poids d'un copolymère d'éthylène linéaire d'éthylène et de 1-hexène, ayant une masse volumique de 0,9 à 0,935 g/cm³ ("LLDPE"), dans lequel au moins 5 % mais moins de 20 % en poids du copolymère LLDPE sont obtenus à partir de 1-hexène, et de 5 à 40 % en poids d'un polyéthylène ramifié basse densité ("LDPE") ayant une densité de 0,923 à 0,925.

2. Procédé selon la revendication 1, dans lequel la teneur en 1-hexène du LLDPE est de 6 à 15 % en poids, et l'orientation du film au moins 3X tant dans la direction machine que dans la direction transversale.

3. Procédé selon l'une ou l'autre des revendications 1 et 2, dans lequel le point de fusion du LDPE est au moins 10°C en dessous du point de fusion du LLDPE.
